# EUROPÄISCHE PATENTSCHRIFT

(11) **EP 2 571 139 B1**
(45) Veröffentlichungstag und Bekanntmachung des Hinweises auf die Patenterteilung: **24.01.2018**
(21) Anmeldenummer: 12003771.8
(22) Anmeldetag: 12.05.2012
(51) Int. Cl.: H02J 13/00, H02J 3/14

(54) **Gebäudetechnik-Energiemanagementsystem und Verfahren zur Fehlerdiagnose**
Building technology energy management system and error diagnosis method
Système de gestion d'énergie dans la technique de bâtiment et procédé de diagnostic d'erreur

(30) Priorität: 09.06.2011 DE 102011103669
(43) Veröffentlichungstag der Anmeldung: 20.03.2013
(73) Patentinhaber: ABB AG, 68309 Mannheim (DE)
(72) Erfinder: Rossebo, Judith E. Y., 0852 Oslo (NO); Rizvanovic, Larissa, 72471 Västeras (SE); Stoll, Pia, 72346 Västeras (SE); Bag, Gargi, 72344 Västeras (SE); Akerholm, Mikael, 72240 Västeras (SE)

(56) Entgegenhaltungen:
- US-A1- 2010 060 079
- US-A1- 2010 131 117
- US-A1- 2010 222 935
- US-A1- 2011 077 789

## Beschreibung

Die Erfindung betrifft ein Gebäudetechnik-Energiemanagementsystem, umfassend eine Datenverarbeitungsvorrichtung mit einer Ausgabevorrichtung, Mittel zur Vorgabe einer Referenzzeit, wenigstens einen mittels der Datenverarbeitungsvorrichtung über jeweilige Kommunikationskanäle kontrollierbaren elektrischen Verbraucher, wenigstens einen nicht mittels der Datenverarbeitungsvorrichtung kontrollierbaren elektrischen Verbraucher, sowie eine Messvorrichtung zur Erfassung des elektrischen Gesamtenergieverbrauches. Die Erfindung betrifft auch ein entsprechendes Verfahren zur Fehlerdiagnose.

Es ist allgemein bekannt, dass zur Regelung und Steuerung verschiedener elektrischer Verbraucher beziehungsweise Lasten in einem Gebäude oder in Gebäudekomplexen Gebäudetechnik-Energiemanagementsysteme zum Einsatz kommen.

Prinzipiell ist davon auszugehen, dass alle Lastanforderungen der Verbraucher in einem Gebäude oder Gebäudekomplex auch gedeckt werden. Bei völlig unkontrollierten Lastanforderungen kann es aber zu unerwünschten Lastspitzen oder auch Lastsenken kommen, welche negative Rückwirkungen auf das übergeordnete Versorgungsnetz haben können. Aufgabe eines Gebäudetechnik-Energiemanagementsystems ist es, für eine gleichmäßigere oder anderen Optimierungskriterien entsprechende zeitliche Verteilung der Gesamtlast zu sorgen. Dies erfolgt dadurch, dass Lasten, deren bedarfsweise Zu- und Abschaltung zeitlich in gewissen Grenzen plan- und verschiebbar ist, derart angesteuert werden, dass sich ein realer Lastverlauf ergibt, welcher einem vorgegebenen beziehungsweise bestimmten Optimierungskriterien angenäherten Lastverlauf entspricht.

Insbesondere elektrische Batterien gehören zu dieser Art von Verbraucher, welche sich aufgrund ihrer Speicher- und Einspeisefunktionalität besonders zur Veränderung beziehungsweise Optimierung des Gesamtlastverbrauches eignen. Ebenso sind auch lokale Energieerzeuger wie Generatoren entsprechend geeignet. Derartige ansteuerbare Lasten sind aber beispielsweise auch elektrische Heizungen, Klimaanlagen oder auch Kühlschränke oder der gleichen, welche im weiteren Sinne über eine Speicherfunktionalität verfügen. Neben den genannten zumindest bedingt kontrollierbaren Lasten gibt es aber auch unkontrollierbare beziehungsweise nicht-planbare Lasten, deren Bedarf unmittelbar und ohne Zeitverzug bei Lastanforderung zu decken ist. Hierzu gehört beispielsweise die Stromversorgung von Computern, Fernsehern aber auch Zimmerbeleuchtung.

Eine Voraussetzung für ein derartiges Gebäudetechnik-Energiemanagementsystem ist daher eine Datenverarbeitungsvorrichtung im weiteren Sinne, welcher die relevanten Kenndaten des Gebäudenetzes und der verschiedenen Verbraucher zur Verfügung gestellt sind. Anhand dieser Daten zusammen mit aktuellen Lastdaten ist es möglich, die Lastverteilung durch gezieltes Ansteuern der kontrollierbaren Lasten entsprechend eventueller Optimierungskriterien zu steuern oder auch zu regeln. Hierzu sind die kontrollierbaren Lasten mit einem Interface auszurüsten, so dass diese fernsteuerbar werden. Weiterhin sind entsprechende Kommunikationskanäle zwischen der Datenverarbeitungsvorrichtung und den (fern-) steuerbaren beziehungsweise kontrollierbaren Lasten notwendig, beispielsweise zur Übertragung von Steuersignalen oder eines vorgegebenen Lastwertes an die Last oder auch zur Statusrückmeldung der jeweiligen Last an die Datenverarbeitungsvorrichtung.

Für die Kommunikation zwischen Datenverarbeitungsvorrichtung und den Interfaces der zu kontrollierenden Lasten und weiteren Komponenten sind verschiedenste Kommunikationsprotokolle beziehungsweise Standards etabliert, wie beispielsweise ,Simple Network Management' (SNMP) oder ,NetConf, welche auf dem TCP/IP Standard beruhen. Als Komponenten, welche in ein Gebäudetechnik-Energiemanagementsystem zu integrieren sind, kommen beispielsweise auch Messgeräte, Sensoren, Aktuatoren, Anzeigegeräte, Energiespeicher, Solarpanels oder sonstige Energieerzeuger in Betracht. All diese Komponenten sind zumeist von verschiedenen Herstellern, welche auch verschiedenste Kommunikations- und Übertragungsstandards (wie beispielsweise KNX, ZigBee oder Z-Wave als kabel- oder funkgebundene Kommunikationsschnittstelle) beziehungsweise Gerätefunktionen verwenden.

Die gesamte Vielzahl an Kommunikations- und Übertragungsstandards muss von der Datenverarbeitungsvorrichtung beherrscht werden. Dies ist beispielsweise im Falle eines Demand Response Systems, also bei einer Anfrage der Datenverarbeitungsvorrichtung an die zu kontrollierende Komponente und einer entsprechenden Rückantwort derselben, einfacher als bei komplexeren Funktionen, welche in eine lokale Steuereinrichtung der Komponente integriert ist.

Eine für die Funktionalität eines Gebäudetechnik-Energiemanagementsystem wesentliche Funktionalität, ist die sichere und kontinuierliche Überprüfung, inwieweit alle Komponenten, mit welchen die Datenverarbeitungsvorrichtung kommuniziert, auch funktionsfähig sind beziehungsweise ob die jeweiligen Kommunikationskanäle funktionsfähig sind.

Als nachteilig hierbei erweist es sich, dass bei den verschiedenen anzusteuernden Komponenten und Lasten eine Vielzahl an Kommunikations- und Übertragungsstandards vorliegt. Es kann zwar insoweit davon ausgegangen werden, dass eine Kommunikation zu der jeweiligen Komponente prinzipiell möglich ist, nicht jedoch, dass eventuell in der Komponente oder deren Interface integrierte Fehlerdiagnoseroutinen in jedem Fall aufrufbar sind. Dies erweist sich als negativ für eine sichere Betriebsführung.

Ausgehend von diesem Stand der Technik ist es Aufgabe der Erfindung, ein Gebäudetechnik-Energiemanagementsystem bereitzustellen, welches über eine erweiterte Fehlerdiagnosemöglichkeiten verfügt.

Diese Aufgabe wird gelöst durch ein Gebäudetechnik-Energiemanagementsystem der eingangs genannten Art. Dieses ist dadurch gekennzeichnet, dass die Datenverarbeitungsvorrichtung Mittel umfasst, den Gesamtenergieverbrauch pro Zeiteinheit in Bezug auf die Referenzzeit zu prognostizieren und im Betrieb des Systems anhand der Prognose sowie der Messwerte der Messvorrichtung einen Differenzverbrauch zum realen Gesamtenergieverbrauch pro Zeiteinheit zu ermitteln, dass die Datenverarbeitungsvorrichtung weiterhin Mittel umfasst, den wenigstens einen kontrollierbaren Verbraucher und/oder die jeweiligen Kommunikationskanäle bei Vorliegen eines Abweichungskriteriums des Energieverbrauches auf eine Fehlfunktion zu überprüfen und dass die Datenverarbeitungsvorrichtung weiterhin Mittel umfasst, im Falle einer jeweils festgestellten Fehlfunktion eine entsprechende Warnmeldung an der Ausgabevorrichtung auszugeben.

Die Grundidee der Erfindung besteht darin, eine Fehlerdiagnose der Komponenten und der Kommunikationskanäle eines Gebäudetechnik-Energiemanagementsystems zentral durch die Datenverarbeitungsvorrichtung durchführen zu lassen und so prinzipiell auf in den Geräten oder Komponenten integrierte Fehlerdiagnosefunktionalitäten verzichten zu können. Die Überprüfung der jeweiligen Komponente ist dann im Wesentlichen auf das Senden eines Anfrage- oder Überprüfungssignals von der Datenverarbeitungsvorrichtung an die Komponente, ein Quittieren desselben durch die Komponente und ein Zurücksenden an die Datenverarbeitungsvorrichtung reduziert.

Für ein kontinuierliches Überwachen aller Komponenten wäre allerdings ein erheblicher Kommunikationsaufwand notwendig, denn eine Überprüfung müsste dann in geringen Zeitintervallen, beispielsweise im Sekundenbereich, erfolgen. Bei der Nutzung einer Fehlerdiagnosefunktion einer Komponente im Fehlerfall hingegen würde diese einmalig aktiv ein Signal zur Datenverarbeitungsvorrichtung senden. Zur Vermeidung einer kontinuierlichen Abfrage der Komponenten ist es daher erfindungsgemäß vorgesehen, kontinuierlich ein Triggerkriterium zu überwachen, welches Aufschluss darüber gibt, ob eine Fehlfunktion vorliegen könnte und erst in diesem Fall eine Überprüfung der Komponenten beziehungsweise Kommunikationskanäle zu initiieren.

Als Triggerkriterium ist erfindungsgemäß das Auftreten eines Differenzverbrauches zwischen einem gemessenen Gesamtenergieverbrauch in einem bestimmten Zeitintervall und einem prognostizierten Gesamtenergieverbrauch im selben Zeitintervall oder aber auch eine Differenz einer gemessenen Gesamtmomentanleistung zu einer prognostizierten Gesamtmomentanleistung zu wählen. Aufgrund der zeitlichen Filterfunktion ist jedoch der Gesamtenergieverbrauch pro Zeiteinheit, beispielsweise wenige Sekunden oder aber auch im Bereich von 15min und größer, zu bevorzugen.

Für den unrealistischen Fall, dass ausschließlich kontrollierbare Lasten beziehungsweise Verbraucher in dem (elektrischen) Gebäudenetz vorhanden wären, würde prinzipiell ein Vergleich der summarisch den Verbrauchern vorgegebenen Leistung mit der tatsächlich verbrauchten Leistung genügen, um das Vorhandensein einer Fehlfunktion festzustellen und daraus ein Triggerkriterium abzuleiten. Entsprechendes gilt natürlich auch für einen jeweiligen Differenzenergieverbrauch pro Zeiteinheit.

Bedingt durch den wenigstens einen nicht durch die Datenverarbeitungsvorrichtung kontrollierbaren Verbraucher ist jedoch stets ein unbekannter Anteil am Gesamtenergieverbrauch pro Zeiteinheit vorhanden, welcher einen direkten Vergleich unmöglich macht. Deshalb ist erfindungsgemäß vorgesehen, den Energieverbrauch des wenigstens einen nicht kontrollierbaren Verbrauchers zu prognostizieren. In diesem Falle wird typischerweise der reale Gesamtenergieverbrauch für einen Zeitraum gemessen, der Anteil des vorgegebenen Energieverbrauches der kontrollierten Verbraucher davon subtrahiert, so dass sich ein rechnerischer Wert für den Anteil der unkontrollierten Lasten am Gesamtverbrauch ergibt. Dieser ist letztendlich dann mit einem prognostizierten Wert zu vergleichen.

Typischerweise ist das Verhalten der nicht kontrollierbaren Lasten in jeweiligen vergleichbaren Bezugszeiträumen in einem Gebäudenetz zumeist sehr ähnlich, wobei neben den zwangsläufig vorhandenen tageszeitbedingten Einflüssen auch mit jahreszeitlich bedingten Einflüssen zu rechnen ist. Dies hat seine Ursache darin, dass die unkontrollierbaren Lasten meist direkt von einem Bewohner eines Gebäudes geschaltet werden, wobei ein Mensch dazu tendiert, typische Gewohnheiten zu entwickeln, beispielsweise um 20:00 Uhr einen Fernseher einzuschalten. Diese Gewohnheiten schlagen sich dann in einer typischen Verlaufskurve des Energieverbrauches nieder, welche dann immer auf einen bestimmten Zeitraum bezogen ist. Solche Zeiträume können beispielsweise bestimmt sein durch die Uhrzeit, den Wochentag und/oder die Jahreszeit. Aus diesem Grund sind erfindungsgemäß auch Mittel zur Vorgabe einer Referenzzeit vorgesehen. Unter Hinzuziehung eines Prognosewertes ist somit ein einfach zu ermittelndes Triggerkriterium generierbar, mittels welchem eine Überprüfung der einzelnen steuerbaren Komponenten initiierbar ist. Somit ist auf einfache Weise eine zentrale Diagnosefunktion für das erfindungsgemäße Gebäudetechnik-Energiemanagementsystem bereitgestellt.

Entsprechend einer bevorzugten Variante des erfindungsgemäßen Gebäudetechnik-Energiemanagementsystems beinhalten daher die Mittel zur Prognose des Gesamtenergieverbrauches Mittel zur Prognose der nicht durch die Datenverarbeitungsvorrichtung kontrollierbaren Last. Dies ist im einfachsten Fall ein Computerprogrammprodukt, welches auf der Datenverarbeitungsvorrichtung installiert ist, welche ihrerseits beispielsweise über die Funktionalität eines Personalcomputers verfügt. Aber es sind durchaus auch andere Mittel denkbar, wie beispielsweise programmierbare Logikbausteine oder dergleichen. Die Prognose kann hierbei beispielsweise sowohl mittels eines Algorithmus oder aber auch gespeicherter realer Lastverlaufskurven erfolgen.

Dementsprechend ist in einer weiteren erfindungsgemäßen Variante des Gebäudetechnik-Energiemanagementsystems die Datenverarbeitungsvorrichtung dafür vorgesehen, Lastverlaufsprofile des wenigstens einen nicht mittels der Datenverarbeitungsvorrichtung kontrollierbaren elektrischen Verbrauchers mittels entsprechender Speichermittel zu speichern und als Grundlage für die Prognose des Gesamtenergieverbrauches zu verwenden. Die Lastverläufe ihrerseits werden ermittelt aus der Subtraktion der von der Datenverarbeitungsvorrichtung vorgegebenen Energieverbräuche der kontrollierbaren Lasten von dem gemessenen realen Gesamtverbrauch im selben Bezugszeitraum. Als Speichermedium dienen beispielsweise herkömmliche Massenspeicher wie integrierte Schaltkreise.

Um einen zeitlichen Bezug der gespeicherten Lastverläufe mit dem Prognosezeitraum herzustellen ist erfindungsgemäß vorgesehen, dass für bestimmte Tageszeiten, Wochentage, Wochen, Monate oder sonstige Zeitabschnitte verschiedene Lastprofile mit entsprechender Zeitstempelinformation speicherbar und für die Prognose des Gesamtenergieverbrauches verwendbar sind. Über einen längeren Zeitraum sind dann entsprechende viele Lastkurven im realen Betrieb des Gebäudetechnik-Energiemanagementsystems speicherbar, welche dann als Datenbasis für spätere Prognosen dienen. Es handelt sich in diesem Beispiel dann um eine Art lernbares System.

Eine weitere Erfindungsvariante des Gebäudetechnik-Energiemanagementsystem ist dadurch gekennzeichnet, dass die Mittel zur Überprüfung des wenigstens einen kontrollierbaren Verbrauchers und/oder der jeweiligen Kommunikationskanäle derart ausgeprägt sind, dass ein Überprüfungssignal von der Datenverarbeitungsvorrichtung zu dem wenigstens einen kontrollierbaren Verbraucher gesendet werden kann, welcher seinerseits dafür vorgesehen ist, dieses zu quittieren und zurückzusenden und dass weiterhin Mittel vorgesehen sind zur Auswertung des gegebenenfalls quittierten und zurückgesendeten Überprüfungssignals. Dies ist eine Minimalanforderung an die Kommunikationskanäle und die jeweiligen zu kontrollierenden Komponenten, so dass diese auf eine jeweilige Fehlfunktion prüfbar sind. Die Kommunikationskanäle können beispielsweise realisiert sein durch separate Datenleitungen, mittels Ein- und Auskopplungsvorrichtungen an die Energieübertragungsleitungen zu den Verbrauchern (Powerline), Bus-Systeme (POE, KNX) oder auch per Funk (KNX, ZigBee).

Besonders vorteilhaft ist es, wenn die Ausgabevorrichtung eine Bildschirmeinheit beinhaltet, so dass die Netzstruktur und eventuell als fehlerhaft festgestellte Komponenten grafisch darstellbar sind. Alternativ sind auch ein oder auch mehrere Displays oder verschiedene Leuchtdioden oder dergleichen, welche beispielsweise einem jeweiligen Verbraucher zugeordnet sind, realisierbar. Auch die Eingabe über ein Berührungsdisplay ist eine mögliche Variante, also die Darstellung und Eingabe mittels derselben Komponente. Zur weiteren Bedienung ist ein nicht dargestelltes Tastenfeld vorgesehen, es sind aber auch weitere Eingabemöglichkeiten denkbar, beispielsweise zugeordnete Taster. Selbstverständlich ist es auch möglich, dass die Ausgabevorrichtung 14 in die Datenverarbeitungsvorrichtung 12 integriert ist. Aber auch eine Ausführungsvariante der Datenverarbeitungsvorrichtung 12 ohne Anzeigevorrichtung ist ohne weiteres realisierbar, indem beispielsweise im Fehlerfalle Nachrichten oder sonstige Meldungen über ein Bussystem oder einen Schaltkontakt weitergegeben werden.

Die erfindungsgemäße Aufgabe wird auch gelöst durch ein Verfahren zur Fehlerdiagnose eines erfindungsgemäßen Gebäudetechnik-Energiemanagementsystems, umfassend folgende Schritte:
- Messung des summarischen Energieverbrauches in einem Gebäudenetz in einem bestimmten Bezugszeitraum beziehungsweise Zeitpunkt,
- Prognose des Energieverbrauches für die nicht durch die Datenverarbeitungsvorrichtung kontrollierbaren elektrischen Verbraucher für denselben Bezugszeitraum beziehungsweise Zeitpunkt anhand von gespeicherten Lastkurven,
- Addition des Energieverbrauches, welcher den durch die Datenverarbeitungsvorrichtung kontrollierbaren elektrischen Verbrauchern theoretisch vorgegeben ist zu einem prognostizierten Gesamtenergieverbrauch für denselben Bezugszeitraum beziehungsweise Zeitpunkt,
- Ermittlung eines eventuellen Differenzverbrauches,
- Bei Vorliegen eines Abweichungskriteriums des Differenzverbrauches Senden eines jeweiligen zu quittierenden Überprüfungssignals an die jeweiligen kontrollierbaren Verbraucher,
- Auswertung des gegebenenfalls quittierten Überprüfungssignals durch die Datenverarbeitungsvorrichtung, ob eine Fehlfunktion des jeweiligen kontrollierbaren Verbraucher und/oder die jeweiligen Kommunikationskanäle vorliegt,
- Im Falle einer Fehlfunktion Ausgabe einer entsprechenden Meldung auf der Ausgabeeinheit.

Der Bezugszeitraum, auf welchen sich ein Energieverbrauch bezieht, kann prinzipiell infinitesimal klein sein, wodurch der so gebildete Wert einer Momentanleistung entspräche. Bevorzugter Weise wird dieses Verfahren in vorzugsweise kontinuierlichen Zeitschritten wiederholt um so eine kontinuierliche Überwachung des Triggerkriteriums zu ermöglichen. Die erfindungsgemäßen Vorteile des genannten Verfahrens wurden bereits zuvor erläutert.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: ein exemplarisches Gebäudetechnik-Energiemanagementsystem sowie
- Fig. 2: exemplarische Lastverläufe.

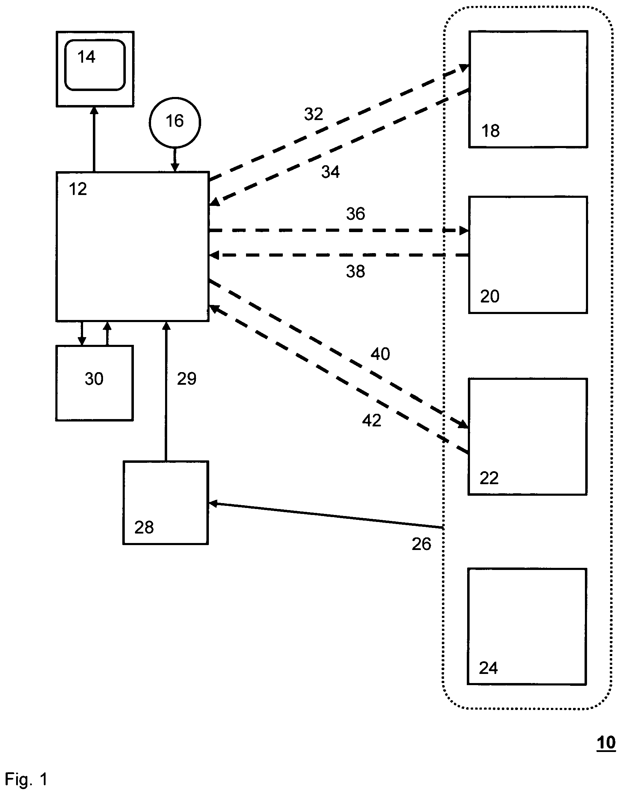

Fig. 1 zeigt ein exemplarisches Gebäudetechnik-Energiemanagementsystem 10 in einem Blockschaltbild. Eine Datenverarbeitungsvorrichtung 12, beispielsweise ein Industrie PC, ist über Kommunikationskanäle 32, 34, 36, 38, 40, 42 mit kontrollierbaren elektrischen Verbrauchen 18, 20, 22 verbunden. Dies können beispielsweise eine Batterie, ein Kühlschrank oder eine Heizung sein. Über diese sind bidirektional Daten und Steuersignale zwischen der Datenverarbeitungsvorrichtung 12 und den Verbrauchern 18, 20, 22 austauschbar. Die Kommunikationskanäle können sowohl durch separate Datenleitungen, wie auch Funkstrecken als auch beispielsweise mittels Ein- und Auskopplungsvorrichtungen an die Energieübertragungsleitungen zu den Verbrauchern realisiert sein. Ein weiterer exemplarischer elektrischer Verbraucher 24 ist ebenfalls im betreffenden Gebäude vorgesehen, dieser ist jedoch nicht über die Datenverarbeitungsvorrichtung 12 kontrollierbar. Dies kann beispielsweise eine Beleuchtung oder ein Fernseher sein. In einem realen Gebäudenetz ist jedoch mit einer erheblich größeren Anzahl an Verbrauchern beziehungsweise Lasten zu rechnen.

Der Energieverbrauch aller 26 Verbraucher 18, 20, 22, 24 wird mittels einer Messvorrichtung zur Ermittlung des Gesamtenergieverbrauches gemessen. Ein Energieverbrauch im Rahmen dieser Erfindung ist stets auf eine Zeiteinheit bezogen, womit bei entsprechend kurzen Zeiteinheiten dieser Wert letztendlich der elektrischen Momentanleistung entspricht. Die Messvorrichtung 28 umfasst beispielsweise eine Strom- und eine Spannungsmessvorrichtung, wobei aus den gemessenen Werten dann eine elektrische Leistung ermittelbar ist. Die Messergebnisse der Messvorrichtung werden der Datenverarbeitungsvorrichtung 12 in Form von Messwerten 29 zur Verfügung gestellt, welche sowohl aktuelle Messwerte der elektrischen Leistung, des Stromes oder der Spannung sein können als auch bereits auf einen bestimmten Zeitraum bezogene Energieverbrauchswerte, beispielsweise im Sekunden- oder Minutenbereich.

Die Datenverarbeitungsvorrichtung 12 ist bidirektional verbunden mit einem Speichermittel 30 für Lastprofile, typischerweise einem elektronischen Speicher, welcher direkt in der Datenverarbeitungsvorrichtung 12 integriert sein kann. Im normalen Betrieb sind optional real ermittelte Lastprofile dort abspeicherbar und auch zu Prognosezwecken von dort abrufbar. Ebenfalls vorgesehen sind Mittel 16 zur Vorgabe einer Referenzzeit, beispielsweise eine Systemuhr, welche ebenfalls in die Datenverarbeitungsvorrichtung integriert sein kann. Zur Kommunikation mit dem Benutzer ist eine Ausgabevorrichtung 14 vorgesehen, beispielsweise ein Bildschirm, ein oder auch mehrere Displays oder verschiedene Leuchtdioden oder dergleichen, welche beispielsweise einem jeweiligen Verbraucher zugeordnet sind. Selbstverständlich ist es denkbar, dass die Ausgabevorrichtung 14 in die Datenverarbeitungsvorrichtung 12 integriert ist. Zur weiteren Bedienung ist ein nicht dargestelltes Tastenfeld vorgesehen, es sind aber auch weitere Eingabemöglichkeiten denkbar, beispielsweise zugeordnete Taster.

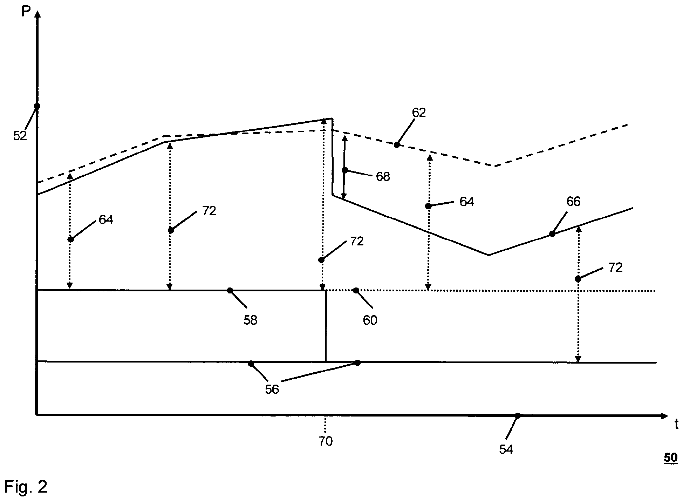

Fig. 2 zeigt exemplarische Lastverläufe 50, wobei hier Leistungswerte 52 über einer Zeitachse 54 aufgetragen sind, welche beispielsweise einen Zeitraum zwischen 18:00 Uhr und 24:00 Uhr eines Werktages im Sommer abdeckt. Mit der Bezugsziffer 66 in einer durchgezogenen Linie dargestellt ist der zeitliche Verlauf einer realen Verlaufskurve Gesamtlastverlaufes beziehungsweise eines gemessenen Gesamtenergieverbrauches pro Zeiteinheit. Dieser setzt sich additiv zusammen aus einem realen Lastverlauf 56 eines ersten kontrollierbaren Verbrauchers, einem realen Lastverlauf 58 eines zweiten kontrollierbaren Verbrauchers und einem realen Lastverlauf 72 eines nicht-kontrollierbaren Verbrauchers. Die Erfassung dieses realen Lastverlaufes erfolgt mittels geeigneter Messvorrichtungen an einer zentralen Einspeisestelle. Der Lastverlauf fällt in einem mit der Bezugsziffer 70 gekennzeichneten Fehlerzeitpunkt sprungartig ab.

Hintergrund hierfür ist, dass der reale Lastverlauf 58 der zweiten Last aufgrund einer in diesem Moment eingetretenen Fehlfunktion sprungartig auf null fällt und von seiner eigentlichen Lastvorgabe, welche mit der Bezugsziffer 60 gekennzeichnet ist, abweicht.

Die gestrichelte Linie mit der Bezugsziffer 62 stellt eine prognostizierte Gesamtlastkurve beziehungsweise einen prognostizierten Gesamtenergieverbrauch pro Zeiteinheit dar. Dieser wird von einer entsprechenden Datenverarbeitungsvorrichtung aus den Vorgabewerten für erste und zweite Last sowie einem prognostizierten Energieverbrauch 64 pro Zeiteinheit des nicht-kontrollierbaren Verbrauchers errechnet. Die Prognose erfolgt in diesem Beispiel durch die Verwendung einer bekannten Verlaufskurve aus einem vergleichbaren Zeitraum.

Bis zum Fehlerzeitpunkt 70 stimmen realer und prognostizierter Gesamtenergieverbrauch in etwa überein, eventuelle Abweichungen sind auf normale Prognoseungenauigkeiten zurückzuführen. Ab dem Fehlerzeitpunkt 70 ist jedoch eine erhebliche Abweichung 68 der beiden Verläufe festzustellen, welche in etwa der Lastvorgabe 60 des zweiten Verbrauchers entspricht. Hieraus ist ein Triggersignal generierbar, welches eine Überprüfung aller kontrollierbaren Verbraucher startet, wie zuvor bereits erläutert.

Für den Fall, dass ein Triggersignal generiert wurde, ohne dass eine Fehlfunktion einer Komponente vorlag, wird auch die Überprüfung der Komponenten keine Fehlfunktion ergeben. Zur Vermeidung einer wiederholten Generierung eines Triggersignals ist es sinnvoll, die Ermittlung des Triggersignals in diesem Falle nach anderen Regeln erfolgen zu lassen, beispielsweise indem eine andere Lastkurve für die Prognose verwendet wird.

### Bezugszeichenliste

- 10: exemplarisches Gebäudetechnik-Energiemanagementsystem
- 12: exemplarische Datenverarbeitungsvorrichtung
- 14: Ausgabevorrichtung
- 16: Mittel zur Vorgabe einer Referenzzeit
- 18: erster kontrollierbarer elektrischer Verbraucher
- 20: zweiter kontrollierbarer elektrischer Verbraucher
- 22: dritter kontrollierbarer elektrischer Verbraucher
- 24: nicht kontrollierbarer elektrischer Verbraucher
- 26: Verbraucher für Gesamtenergieverbrauch
- 28: Messvorrichtung zur Ermittlung des Gesamtenergieverbrauches
- 29: Messwerte Gesamtenergieverbrauch
- 30: Speichermittel für Lastverlaufprofile
- 32: erster Kommunikationskanal
- 34: zweiter Kommunikationskanal
- 36: dritter Kommunikationskanal
- 38: vierter Kommunikationskanal
- 40: fünfter Kommunikationskanal
- 42: sechster Kommunikationskanal
- 50: exemplarische Lastverläufe
- 52: Leistungswert
- 54: Zeit
- 56: Lastvorgabe und reale Last Verbraucher 1
- 58: reale Last Verbraucher 2
- 60: Lastvorgabe Verbraucher 2
- 62: prognostizierter Gesamtenergieverbrauch
- 64: prognostizierter Energieverbrauch des nicht-kontrollierbaren Verbrauchers
- 66: realer Gesamtenergieverbrauch
- 68: Differenzverbrauch
- 70: Fehlerzeitpunkt
- 72: realer Energieverbrauch des nicht-kontrollierbaren Verbrauchers

## Patentansprüche

1. Gebäudetechnik-Energiemanagementsystem (10), umfassend
• eine Datenverarbeitungsvorrichtung (12) mit einer Ausgabevorrichtung (14),
• Mittel (16) zur Vorgabe einer Referenzzeit,
• wenigstens einen mittels der Datenverarbeitungsvorrichtung (12) über jeweilige Kommunikationskanäle (32, 34, 36, 38, 40, 42) kontrollierbaren elektrischen Verbraucher (18, 20, 22),
• wenigstens einen nicht mittels der Datenverarbeitungsvorrichtung (12) kontrollierbaren elektrischen Verbraucher (24),
• eine Messvorrichtung (28) zur Erfassung des elektrischen Gesamtenergieverbrauches (26) pro Zeiteinheit,
**dadurch gekennzeichnet, dass**
die Datenverarbeitungsvorrichtung (12) Mittel umfasst, den Gesamtenergieverbrauch pro Zeiteinheit (26) in Bezug auf die Referenzzeit zu prognostizieren und im Betrieb des Systems anhand der Prognose (62) sowie der Messwerte (29) der Messvorrichtung (28) einen Differenzverbrauch (68) zum realen Gesamtenergieverbrauch (66) zu ermitteln, dass die Datenverarbeitungsvorrichtung (12) weiterhin Mittel umfasst, den wenigstens einen kontrollierbaren Verbraucher (18, 20, 22) und/oder die jeweiligen Kommunikationskanäle (32, 34, 36, 38, 40, 42) bei Vorliegen eines Abweichungskriteriums des Energieverbrauches auf eine Fehlfunktion zu überprüfen und dass die Datenverarbeitungsvorrichtung (12) weiterhin Mittel umfasst, im Falle einer jeweils festgestellten Fehlfunktion eine entsprechende Warnmeldung an der Ausgabevorrichtung (14) auszugeben.

2. Gebäudetechnik-Energiemanagementsystem nach Anspruch 1, **dadurch gekennzeichnet, dass** die Mittel zur Prognose (62) des Gesamtenergieverbrauches (26) Mittel zur Prognose (64) der nicht durch die Datenverarbeitungsvorrichtung (12) kontrollierbaren Last (24) beinhalten.

3. Gebäudetechnik-Energiemanagementsystem nach Anspruch 2, **dadurch gekennzeichnet, dass** die Datenverarbeitungsvorrichtung (12) dafür vorgesehen ist, reale Lastverlaufsprofile (72) des wenigstens einen nicht mittels der Datenverarbeitungsvorrichtung (12) kontrollierbaren elektrischen Verbrauchers (24) mittels entsprechender Speichermittel (30) zu speichern und als Grundlage für die Prognose (62) des Gesamtenergieverbrauches zu verwenden.

4. Gebäudetechnik-Energiemanagementsystem nach Anspruch 3, **dadurch gekennzeichnet, dass** für bestimmte Tageszeiten, Wochentage, Wochen, Monate oder sonstige Zeitabschnitte verschiedene Lastprofile (64) mit entsprechender Zeitstempelinformation speicherbar und für die Prognose (62) des Gesamtenergieverbrauches verwendbar sind.

5. Gebäudetechnik-Energiemanagementsystem nach einem der vorherigen Ansprüche, **dadurch gekennzeichnet, dass** die Mittel zur Überprüfung des wenigstens einen kontrollierbaren Verbrauchers (18, 20, 22) und/oder der jeweiligen Kommunikationskanäle (32, 34, 36, 38, 40, 42) derart ausgeprägt sind, dass ein Überprüfungssignal von der Datenverarbeitungsvorrichtung (12) zu dem wenigstens einen kontrollierbaren Verbraucher (18, 20, 22) gesendet werden kann, welcher seinerseits dafür vorgesehen ist, dieses zu quittieren und zurückzusenden und dass weiterhin Mittel vorgesehen sind zur Auswertung des gegebenenfalls quittierten und zurückgesendeten Überprüfungssignals.

6. Gebäudetechnik-Energiemanagementsystem nach einem der vorherigen Ansprüche, **dadurch gekennzeichnet, dass** die Ausgabevorrichtung (14) eine Bildschirmeinheit beinhaltet.

7. Verfahren zur Fehlerdiagnose eines Gebäudetechnik-Energiemanagementsystems nach einem der Ansprüche 1 bis 6, umfassend folgende Schritte:
• Messung (28) des summarischen Energieverbrauches (26, 66) in einem Gebäudenetz in einem bestimmten Bezugszeitraum beziehungsweise Zeitpunkt,
• Prognose (62) des Energieverbrauches für die nicht durch die Datenverarbeitungsvorrichtung (12) kontrollierbaren elektrischen Verbraucher (24) für denselben Bezugszeitraum beziehungsweise Zeitpunkt anhand von gespeicherten Lastkurven (64),
• Addition des Energieverbrauches, welcher den durch die Datenverarbeitungsvorrichtung (12) kontrollierbaren elektrischen Verbrauchern (18, 20, 22) theoretisch vorgegeben (56, 60) ist zu einem prognostizierten Gesamtenergieverbrauch (62) für denselben Bezugszeitraum beziehungsweise Zeitpunkt,
• Ermittlung eines eventuellen Differenzverbrauches (68),
• Bei Vorliegen eines Abweichungskriteriums des Differenzverbrauches (68) Senden eines jeweiligen zu quittierenden Überprüfungssignals an die jeweiligen kontrollierbaren Verbraucher (18, 20, 22),
• Auswertung des gegebenenfalls quittierten Überprüfungssignals durch die Datenverarbeitungsvorrichtung (12), ob eine Fehlfunktion des jeweiligen kontrollierbaren Verbraucher (18, 20, 22) und/oder die jeweiligen Kommunikationskanäle (32, 34, 36, 38, 40, 42) vorliegt,
• Im Falle einer Fehlfunktion Ausgabe einer entsprechenden Meldung auf der Ausgabeeinheit (14).

8. Verfahren nach Anspruch 7, **dadurch gekennzeichnet, dass** dieses in vorzugsweise kontinuierlichen Zeitschritten wiederholt wird.

## Claims

1. Building technology energy management system (10) comprising
• a data processing apparatus (12) having an output apparatus (14),
• means (16) for specifying a reference time,
• at least one electrical consumer (18, 20, 22) which can be controlled by means of the data processing apparatus (12) via respective communication channels (32, 34, 36, 38, 40, 42),
• at least one electrical consumer (24) which cannot be controlled by means of the data processing apparatus (12),
• a measuring apparatus (28) for recording the total electrical energy consumption (26) per unit time,
**characterized in that**
the data processing apparatus (12) comprises means for predicting the total energy consumption per unit time (26) with respect to the reference time and for determining a difference in consumption (68) with respect to the real total energy consumption (66) during operation of the system on the basis of the prediction (62) and the measured values (29) from the measuring apparatus (28), **in that** the data processing apparatus (12) also comprises means for checking the at least one controllable consumer (18, 20, 22) and/or the respective communication channels (32, 34, 36, 38, 40, 42) for a malfunction if there is a deviation criterion of the energy consumption, and **in that** the data processing apparatus (12) also comprises means for outputting a corresponding warning message on the output apparatus (14) if a malfunction is respectively determined.

2. Building technology energy management system according to Claim 1, **characterized in that** the means for predicting (62) the total energy consumption (26) comprises means for predicting (64) the load (24) which cannot be controlled by the data processing apparatus (12) .

3. Building technology energy management system according to Claim 2, **characterized in that** the data processing apparatus (12) is provided for the purpose of storing real load curve profiles (72) of the at least one electrical consumer (24) which cannot be controlled by means of the data processing apparatus (12) by means of corresponding storage means (30) and of using said profiles as the basis for predicting (62) the total energy consumption.

4. Building technology energy management system according to Claim 3, **characterized in that** different load profiles (64) with corresponding time stamp information can be stored for particular times of the day, days of the week, weeks, months or other periods of time and can be used to predict (62) the total energy consumption.

5. Building technology energy management system according to one of the preceding claims, **characterized in that** the means for checking the at least one controllable consumer (18, 20, 22) and/or the respective communication channels (32, 34, 36, 38, 40, 42) are designed such that a checking signal can be transmitted from the data processing apparatus (12) to the at least one controllable consumer (18, 20, 22) which in turn is provided for the purpose of acknowledging and returning said signal, and **in that** means are also provided for the purpose of evaluating the possibly acknowledged and returned checking signal.

6. Building technology energy management system according to one of the preceding claims, **characterized in that** the output apparatus (14) comprises a screen unit.

7. Method for diagnosing faults in a building technology energy management system according to one of Claims 1 to 6, comprising the following steps of:
• measuring (28) the summary energy consumption (26, 66) in a building network in a particular reference period or time,
• predicting (62) the energy consumption for the electrical consumers (24) which cannot be controlled by the data processing apparatus (12) for the same reference period or time on the basis of stored load curves (64),
• adding the energy consumption, which is theoretically specified (56, 60) to the electrical consumers (18, 20, 22) which can be controlled by the data processing apparatus (12), to a predicted total energy consumption (62) for the same reference period or time,
• determining a possible difference in consumption (68),
• transmitting a respective checking signal to be acknowledged to the respective controllable consumers (18, 20, 22) if there is a deviation criterion of the difference in consumption (68),
• evaluating the possibly acknowledged checking signal by means of the data processing apparatus (12) in order to determine whether there is a malfunction of the respective controllable consumer (18, 20, 22) and/or the respective communication channels (32, 34, 36, 38, 40, 42),
• outputting a corresponding message on the output unit (14) if there is a malfunction.

8. Method according to Claim 7, **characterized in that** this is repeated in preferably continuous time steps.

## Revendications

1. Système de gestion de l'énergie (10) pour la technique du bâtiment, comprenant
- un dispositif de traitement de données (12) comportant un dispositif de sortie (14),
- des moyens (16) destinés à spécifier un temps de référence,
- au moins un consommateur électrique (18, 20, 22) pouvant être contrôlé au moyen du dispositif de traitement de données (12) par l'intermédiaire de canaux de communication (32, 34, 36, 38, 40, 42) respectifs,
- au moins un consommateur électrique (24) qui ne peut pas être contrôlé au moyen du dispositif de traitement de données (12),
- un dispositif de mesure (28) destiné à détecter la consommation totale d'énergie électrique (26) par unité de temps,
**caractérisé en ce que**
le dispositif de traitement de données (12) comprend des moyens destinés à prévoir la consommation totale d'énergie par unité de temps (26) par rapport au temps de référence et à déterminer, pendant le fonctionnement du système, sur la base de la prévision (62) et des valeurs de mesure (29) du dispositif de mesure (28), une consommation différentielle (68) par rapport à la consommation totale d'énergie réelle (66), **en ce que** le dispositif de traitement de données (12) comprend en outre des moyens destinés à vérifier un dysfonctionnement d'au moins un consommateur (18, 20, 22) pouvant être contrôlé et/ou de canaux de communication respectifs (32, 34, 36, 38, 40, 42) lorsqu'un critère d'écart de la consommation d'énergie est présent, et **en ce que** le dispositif de traitement de données (12) comprend en outre des moyens destinés à délivrer un message d'avertissement correspondant au dispositif de sortie (14) dans le cas où un dysfonctionnement respectif est détecté.

2. Système de gestion de l'énergie pour la technique du bâtiment selon la revendication 1, **caractérisé en ce que** les moyens de prévision (62) de la consommation totale d'énergie (26) comprennent des moyens de prévision (64) de la charge (24) qui ne peut pas être contrôlée par le dispositif de traitement de données (12).

3. Système de gestion de l'énergie pour la technique du bâtiment selon la revendication 2, **caractérisé en ce que** le dispositif de traitement de données (12) est prévu pour stocker le profil de charge réel (72) d'au moins un consommateur électrique (24) qui ne peut pas être contrôlé au moyen du dispositif de traitement de données (12) à l'aide de moyens de stockage correspondants (30) et pour l'utiliser comme base pour la prévision (62) de la consommation totale d'énergie.

4. Système de gestion de l'énergie pour la technique du bâtiment selon la revendication 3, **caractérisé en ce que** différents profils de charge (64) contenant des informations de marquage temporel correspondantes peuvent être mémorisés pour certaines heures du jour, certains jours de la semaine, certaines semaines, certains mois ou d'autres périodes de temps et peuvent être utilisés pour la prévision (62) de la consommation totale d'énergie.

5. Système de gestion de l'énergie pour la technique du bâtiment selon l'une quelconque des revendications précédentes, **caractérisé en ce que** les moyens destinés à vérifier l'au moins un consommateur (18, 20, 22) et/ou les canaux de communication respectifs (32, 34, 36, 38, 40, 42) sont conçus de telle sorte qu'un signal de vérification peut être envoyé du dispositif de traitement de données (12) audit au moins un consommateur (18, 20, 22) pouvant être contrôlé qui, quant à lui, est prévu pour l'acquitter et pour le renvoyer, et **en ce qu'**il est en outre prévu des moyens pour évaluer le signal de vérification éventuellement acquitté et renvoyé.

6. Système de gestion de l'énergie pour la technique du bâtiment selon l'une quelconque des revendications précédentes, **caractérisé en ce que** le dispositif de sortie (14) comprend une unité d'affichage.

7. Procédé de prévision de défauts d'un système de gestion de l'énergie pour la technique du bâtiment selon l'une quelconque des revendications 1 à 6, comprenant les étapes suivantes :
- mesurer (28) la consommation totale d'énergie (26, 66) dans un réseau de bâtiment au cours d'une période de référence déterminée ou à un instant déterminé,
- prévoir (62) la consommation d'énergie pour les consommateurs électriques (24) qui ne peuvent pas être contrôlés par le dispositif de traitement de données (12) pour la même période de référence ou pour le même instant sur la base des courbes de charge enregistrées (64),
- ajouter la consommation d'énergie théoriquement prédéterminée (56, 60) de consommateurs électriques (18, 20, 22) pouvant être contrôlés par le dispositif de traitement de données (12) à une consommation d'énergie totale prévue (62) pour la même période de référence ou pour le même instant,
- déterminer l'éventuelle consommation différentielle (68) ,
- en présence d'un critère d'écart de la consommation différentielle (68), envoyer aux consommateurs respectifs (18, 20, 22) pouvant être contrôlés un signal de vérification respectif devant être acquitté,
- évaluer au moyen du dispositif de traitement des données (12) le signal de vérification éventuellement acquitté pour déterminer s'il existe un dysfonctionnement du consommateur respectif (18, 20, 22) pouvant être contrôlé et/ou des canaux de communication respectifs (32, 34, 36, 38, 40, 42),
- dans le cas d'un dysfonctionnement, délivrer un message correspondant sur l'unité de sortie (14).

8. Procédé selon la revendication 7, **caractérisé en ce qu'**il est répété de préférence par pas de temps continus.
